# FASCICULE DE BREVET EUROPEEN

(11) **EP 0 451 021 B1**
(45) Date de publication et mention de la délivrance du brevet: **08.11.1995**
(21) Numéro de dépôt: 91400821.4
(22) Date de dépôt: 26.03.1991
(51) Int. Cl.: C04B 2/10, F27B 15/00

(54) **Procédé de formation d'oxyde de calcium**
Verfahren zum Herstellen von Calciumoxid
Process for the formation of calcium oxide

(30) Priorité: 27.03.1990 FR 9003913
(43) Date de publication de la demande: 09.10.1991
(73) Titulaire: ELECTRICITE DE FRANCE Service National, 75008 Paris (FR)
(72) Inventeur: Baudequin, François, F-95600 Eaubonne (FR)
(74) Mandataire: Gutmann, Ernest

(56) Documents cités:
- EP-A- 0 176 433
- DE-B- 1 140 179
- FR-A- 2 600 855
- CHEMICAL ABSTRACTS, vol. 108, 1988, page 160, résumé no. 78099g, Columbus, Ohio, US; J.S. DENNIS et al.: "The effect of carbon dioxide on the kinetics and extent of calcination of limestone and dolomite particles in fluidised beds",
- ZEMENT-KALK-GIPS, vol. 42, décembre 1989, pages 620-627, Wiesbaden, DE; J. BAEYENS et al.: "The development, design and operation of a fluidized bed limestone calciner"

## Description

La présente invention concerne un procédé de formation d'oxyde de calcium à partir de carbonate de calcium.

Elle trouve une application particulièrement importante bien que non exclusive dans le domaine de la fabrication d'oxyde de calcium de grande pureté, c'est-à-dire dont le pourcentage en poids d'impuretés par rapport au poids total est inférieur à quelques ppm, par chauffage électrique de carbonate de calcium pulvérulent, c'est-à-dire de dimension granulométrique moyenne inférieure à de l'ordre de 50 µm, obtenu à partir de pierre calcaire.

L'élaboration d'oxyde de calcium par chauffage de carbonate de calcium, et dissociation suivant la réaction 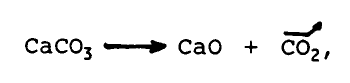
est un procédé tout à fait connu.

La pureté chimique de l'oxyde de calcium obtenu dépend directement, d'une part de la pureté initiale du carbonate de calcium utilisé, et donc a priori des qualités minéralogiques de la carrière de calcaire dont il est issu, et d'autre part du four de calcination utilisé.

Les fours de calcination traditionnellement utilisés sont en effet source de pollution car ils sont en général recouverts de façon interne par des matériaux réfractaires alumineux ou magnésiens qui restent en contact avec les produits lors de la réaction chimique. De plus, le chauffage se fait souvent par une flamme de combustion d'un gaz ou autre produit combustible, génératrice de fumées également polluantes pour l'oxyde de calcium formé.

Si les procédés et dispositifs de formation d'oxyde de calcium utilisant ce type de fours de calcination sont suffisants pour produire de la chaux dite commerciale, où les impuretés représentent quelques pour cent en poids, ils ne sont clairement pas satisfaisants pour élaborer de façon industrielle des chaux plus pures et plus réactives, où les impuretés ne représentent plus que quelques ppm.

L'invention vise à fournir un procédé de formation d'oxyde de calcium répondant mieux que ceux antérieurement connus aux exigences de la pratique, notamment en ce qu'ils permettent de former de l'oxyde de calcium très pur et très réactif, en continu et de façon industrielle, en chauffant électriquement du carbonate de calcium en lit fluidisé, ce qui permet d'être peu polluant à la fois pour l'oxyde de calcium formé et pour l'environnement, tout en conservant une bonne maîtrise des paramètres de température.

Le chauffage électrique d'un matériau pulvérulent en lit fluidisé dans un four ou réacteur est connu. Mais ce procédé de chauffage n'a pas été appliqué à ce jour à la formation d'oxyde de calcium, notamment de façon industrielle, à partir de carbonate de calcium pulvérulent. En effet, le carbonate de calcium pulvérulent présente entre 620° C et 750° C, une zone de ramollissement où les grains ont tendance à s'agglomérer entre eux. Ce palier de ramollissement, parfois appelé "palier de pseudo-sintérisation" par certains auteurs, et qui est d'autant plus marqué que la dimension de grains est petite, interdit donc a priori le chauffage en lit fluidisé de carbonate de calcium pulvérulent à une température suffisante pour que la dissociation en oxyde de calcium s'effectue.

L'invention permet de pallier cet inconvénient.

Dans ce but l'invention propose essentiellement un procédé de formation d'oxyde de calcium à partir de carbonate de calcium pulvérulent selon lequel on réalise dans un réacteur un bain initial d'oxyde de calcium pulvérulent en lit fluidisé que l'on chauffe électriquement à une température supérieure à de l'ordre de 900° C, puis on introduit en continu ledit carbonate de calcium pulvérulent dans le bain en maintenant la température du bain toujours supérieure à de l'ordre de 860° C par chauffage électrique, pour dissocier ledit carbonate de calcium en oxyde de calcium et en gaz carbonique.

L'invention part, en fait, des observations suivantes :
- Le palier de ramollissement n'existe pas pour l'oxyde de calcium pulvérulent, qui peut donc être chauffé en lit fluidisé à 900° C.
- On a par ailleurs constaté expérimentalement que l'introduction du carbonate de calcium pulvérulent "froid" en continu, en chauffant pour maintenir la température en tous points du bain supérieure à la température seuil de décarbonatation, permettait de s'affranchir des risques d'agglomération des grains du carbonate de calcium pulvérulent empêchant la poursuite de la fluidisation.

Dans un mode de réalisation avantageux, le bain initial d'oxyde de calcium pulvérulent en lit fluidisé est obtenu progressivement à partir de carbonate de calcium ou calcaire dont la granulométrie est réduite par étapes. On a pu, en effet, constater après de nombreux essais, que le palier de ramollisement du carbonate de calcium est fonction de la granulométrie de la poudre chauffée, et que pour une granulométrie supérieure à 300 µm, il disparaît pratiquement.

Dans ce mode de réalisation, on chauffe à une température supérieure à environ 900° C, un premier bain en lit fluidisé constitué par du calcaire de diamètre granulométrique moyen supérieur à 300 µm, par exemple d'environ 350 µm, puis, tout en maintenant la température du lit fluidisé au-dessus de 900° C, on introduit progressivement du calcaire de diamètre granulométrique moyen compris entre 150 et 80 µm en ajustant les débits de fluidisation pour obtenir un lit de chaux vive de même granulométrie et, enfin, on introduit progressivement du carbonate de calcium pulvérulent, par exemple de diamètre granulométrique moyen inférieur à de l'ordre de 40 µm, jusqu'à obtenir ledit bain initial d'oxyde de calcium en lit fluidisé à la température supérieure à de l'ordre de 900° C.

Dans un mode de réalisation également avantageux, le carbonate de calcium est obtenu par calcination d'une pierre calcaire prélablement concassée, séparation du calcinat et du gaz carbonique de dissociation, hydratation du calcinat pour élimination des impuretés, et recombinaison du calcinat avec le gaz carbonique de dissociation récupéré, pour former le carbonate de calcium pulvérulent sous forme précipitée.

Le carbonate de calcium ainsi obtenu étant particulièrement pur, la qualité de l'oxyde de calcium issu de la dissociation thermique d'un tel carbonate en est encore améliorée.

Dans d'autres modes de réalisation avantageux, on a de plus, recours à l'une et ou à l'autre des dispositions suivantes :
- on chauffe le bain en lit fluidisé par un réseau d'éléments de chauffage électrique à effet joule, répartis et disposés directement au sein du bain de fluidisation,
- on utilise l'air comme gaz de fluidisation.

Un dispositif de mise en oeuvre du procédé selon l'invention est caractérisé en ce qu'il comporte un réacteur dont les parois internes sont des tôles réalisées ou recouvertes par des métaux ou alliages métalliques réfractaires.

Dans un mode de réalisation avantageux, le réacteur est muni de moyens d'alimentation en carbonate de calcium au partie inférieure du lit fluidisé, et de moyens d'évacuation de l'oxyde de calcium en partie supérieure du lit fluidisé.

L'invention sera mieux comprise à la lecture de modes particuliers de réalisation, donnés à titre d'exemples non limitatifs.

La description se réfère aux dessins qui l'accompagnent, dans lesquels :
- La figure 1 est un schéma de principe de formation d'oxyde de carbone selon le mode de réalisation de l'invention plus particulièrement décrit ici, par chauffage directement au sein du lit fluidisé;
- La figure 2 est un schéma de principe d'un autre mode de réalisation de l'invention, par chauffage externe du lit fluidisé.

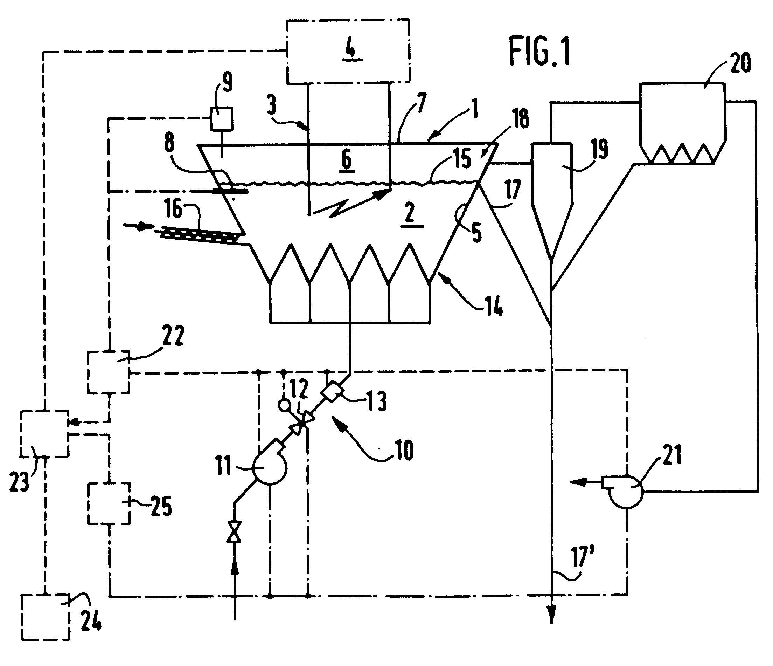

La figure 1 montre schématiquement un dispositif selon le mode de réalisation de l'invention, plus particulièrement décrit ici, comportant un réacteur 1 de calcination du carbonate de calcium pulvérulent, à lit fluidisé 2 chauffé directement en son sein par un système 3 à effet joule alimenté électriquement par une source électrique 4.

Les parois internes 5 du réacteur en contact avec le bain en lit fluidisé sont, de préférence, en alliage métallique réfractaire ou recouvertes d'une couche métallique réfractaire.

Le système 3 peut, par exemple, être constitué par un réseau d'éléments de chauffage à effet Joule du type décrit dans la demande de brevet FR-A-2.600.855. Le réacteur comporte une enceinte fermée 6 munie d'un couvercle 7. Des capteurs de température 8, disposés dans le bain de fluidisation et des capteurs de pression 9 de l'enceinte 6 sont prévus.

Le réacteur est alimenté en gaz de fluidisation, par exemple de l'air, par le bas via un circuit 10 connu en lui même, comprenant un surpresseur 11 avec par exemple un variateur de vitesse, une vanne télécommandée 12 et un débitmètre 13 de mesure de débit de gaz. Le réacteur présente avantageusement mais de façon non limitative, une section croissante de la base 14 vers la surface libre 15 de façon à maintenir les vitesses de fluidisation en deça des vitesses d'envol du carbonate de calcium introduit et de l'oxyde de calcium formé, en lit fluidisé.

L'alimentation en carbonate de calcium pulvérulent, de granulométrie comprise entre 5 et 50 µm, par exemple entre 10 et 40 µm, se fait en continu par le bas du réacteur, par exemple, via une rampe d'alimentation 16 débouchant sur une ouverture pratiquée dans la paroi latérale du four.

Une fois formé, l'oxyde de calcium s'écoule par l'intermédiaire d'un déversoir 17 de trop plein vers la sortie 17′ reliée à une installation de conditionnement.

Le gaz de fluidisation et le gaz carbonique formé lors de la dissociation du carbonate de calcium sont évacués en partie haute 18, vers un circuit de traitement des gaz. Celui-ci comporte par exemple un cyclone de séparation 19 où l'oxyde de calcium pulvérulent encore en suspension est piégé et s'écoule gravitairement vers la sortie 17′, un filtre dépoussiéreur 20, par exemple du type filtre à manche, et un surpresseur 21, par exemple muni d'un variateur de vitesses.

On a représenté également, en tirets et schématiquement sur la figure 1, les liaisons de contrôle et de commande entre les différents éléments de l'installation. Ces éléments sont reliés à une ou plusieurs armoires 22 entrées/sorties de contrôle et de commande d'un automate 23 connecté à un tableau de commande et de signalisation 24.

La commande des surpresseurs 11 et 21, et de la vanne télécommandée 12, alimentés en puissance électrique et/ou pneumatique de façon connue en soi, (en traits mixtes sur la figure 1) se fait via une armoire entrées/sorties 25 commandant les actionneurs.

La puissance électrique fournie par la source 4 est par ailleurs également avantageusement commandée par l'automate 23.

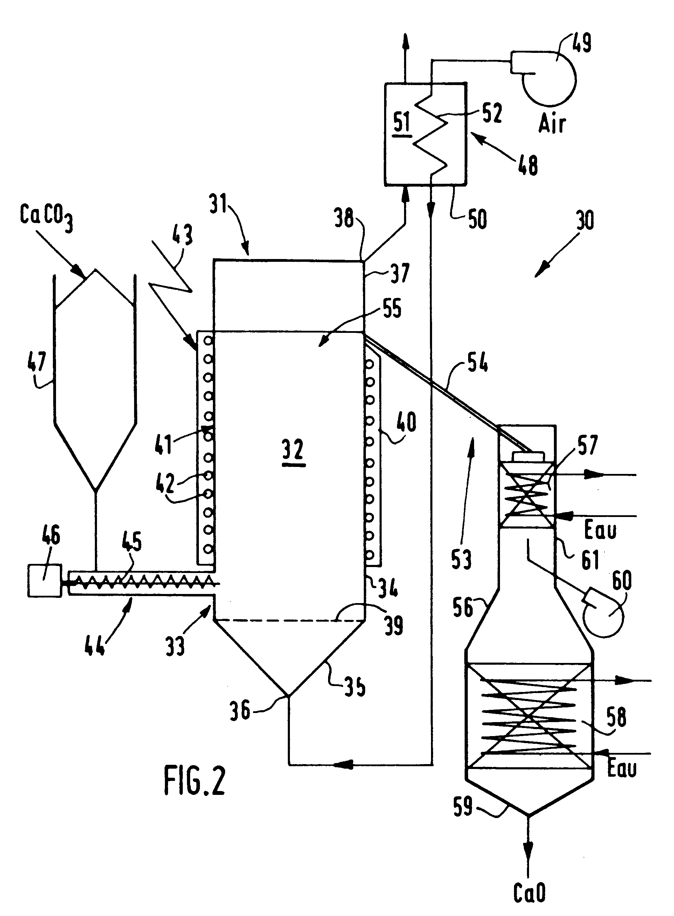

La figure 2 montre un autre mode de réalisation d'un dispositif 30 selon l'invention, comprenant un réacteur 31 de calcination du carbonate de calcium à lit fluidisé 32. Le réacteur comporte une enceinte verticale 33 cylindrique sur sa plus grande partie 34. L'enceinte présente une portion d'extrémité inférieure conique 35 percée au sommet 36 du cone, d'une ouverture d'alimentation en air chaud de fluidisation, et une portion d'extrémité supérieure 37 munie d'une sortie 38 d'évacuation des gaz en partie supérieure.

Une grille 39 de répartition de l'air chaud et de rétention éventuelle, au moins partielle, des particules du lit fluidisé, sépare par exemple la portion 34 de la portion 35.

La partie 34 comporte une coquille externe 40 de chauffage par conduction, plaquée sur la paroi externe 41 de ladite partie, et par exemple constituée de résistances chauffantes, schématisée en 42 sur la figure 2. L'alimentation en puissance électrique 43 se fait par un circuit connu en lui-même (non représenté).

Le carbonate de calcium de faible granulométrie est introduit en partie basse de l'enceinte, au-dessus de la portion d'extrémité inférieure 35 et de la grille 39, par des moyens 44 d'alimentation, par exemple constitués par une vis doseuse 45, actionnée par un moteur électrique 46. La vis est alimentée gravitairement en CaCO₃ via un réservoir tampon 47.

Un circuit 48 d'alimentation en air chaud de fluidisation est prévu. Il comporte par exemple et de façon connue, un ventilateur 49 et un échangeur/réchauffeur tubulaire 50.

L'air et les gaz issus de la calcination servent au réchauffage de l'air chaud de fluidisation en circulant dans la calandre 51, à contre courant avec l'air de fluidisation, qui passe dans les tubulures 52 de l'échangeur. Ce dispositif permet d'importantes économies d'énergie.

Le dispositif comporte également un circuit 53 d'évacuation du CaO formé. Ce circuit comprend une rampe en pente 54 d'évacuation par gravité.

Cette rampe débouche d'un côté dans l'enceinte 34 au-dessus de la coquille chauffante en partie haute 55 du lit fluidisé qui s'y déverse par trop plein. Elle est raccordée de l'autre côté à une colonne 56 de refroidissement munie d'un premier échangeur 57 comprenant des serpentins alimentés en eau de refroidissement, par exemple avec une température d'entrée d'eau de 20°C, et d'un deuxième échangeur 58, refroidi par des serpentins par exemple également alimentés en eau.

Le premier échangeur 57 peut avantageusement être un échangeur du type à triple flux, auquel cas un ventilateur d'air 60 de faible débit est prévu pour alimenter par le bas la portion de colonne 61 munie du premier échangeur 57. Ce courant d'air à contre courant, permet d'une part le refroidissement du CaO éparpillé à l'arrivée de la rampe en haut de colonne 56, et d'autre part le ralentissement de la vitesse de chute de l'oxyde de calcium provenant de la rampe 54 au travers des serpentins de l'échangeur 57.

Le CaO refroidi est évacué en partie inférieure 59 de la colonne, pour être stocké ou traité.

Des moyens de commande et de contrôle, connus en eux-mêmes, des différents éléments du dispositif 30 sont également prévus; ils permettent le fonctionnement du dispositif, par exemple en automatique. Ils n'ont pas été représentés sur la figure 2.

A titre d'exemple, non limitatif, un dispositif 30 de ce type peut calciner 100 kg/h de CaCO₃, en nécessitant une puissance électrique de l'ordre de 140 KW. Un débit d'air de fluidisation de 140 Nm³/h est alors injecté en partie inférieure 35 du réacteur à environ 500° C, générant en sortie 38 un débit de 140 à 150 Nm³/h d'air et de fumée, dont la température peut être ramenée à de l'ordre de 120° C après refroidissement par l'échangeur 50.

La température du CaO formé est par exemple de l'ordre de 150° C après passage dans le premier échangeur 57, le débit du ventilateur 60 étant, par exemple, de l'ordre de 10 Nm³/h.

Le fonctionnement de l'installation mise en oeuvre est maintenant décrit plus précisemment ci-après, en se référant à la figure 1.

On réalise tout d'abord un bain initial d'oxyde de calcium en lit fluidisé chauffé à de l'ordre de 900° C, dans le réacteur 1.

Pour démarrer le réacteur en lit fluidisé pour la première fois, il faut donc disposer d'une première charge d'oxyde de calcium. Lors des démarrages suivants du procédé, il suffira en effet d'utiliser une charge d'oxyde de calcium produite lors d'une campagne d'exploitation précédente.

Pour le premier démarrage, il est essentiellement proposé deux voies :
- on utilise une charge d'oxyde de calcium élaborée dans un autre four, par exemple un four rotatif du type traditionnel, ou bien
- on procède comme suit :
On réalise une première chauffe à une température de l'ordre de 900° C avec une charge de calcaire de diamètre granulométrique moyen relativement important, par exemple 350 µm, ce qui permet d'éviter le phénomène d'agglomération observé avec du calcaire pulvérulent (granulométrie inférieure à de l'ordre de 50 µm) dans la plage de températures de 600° à 750° C. Le chauffage se fait progressivement à partir de la température ambiante jusqu'à 900° C, par exemple automatiquement en étant commandée par l'automate 23. Ce qu'il faut c'est que la température finale du bain soit supérieure à la température seuil de dissociation compte-tenu de la pression de l'enceinte 6. On maintient ensuite cette température pour transformer le bain de carbonate de calcium en lit fluidisé, en un bain de chaux vive fluidisé. Puis on introduit progressivement, via la rampe d'alimentation 16, une charge de calcaire broyé de granulométrie plus fine, par exemple de diamètre granulométrique moyen de l'ordre de 100 µm. Simultanément, les débits de fluidisation sont ajustés, par exemple automatiquement via le variateur de vitesse du surpresseur 11. La température est également contrôlée automatiquement, via les capteurs 8 et maintenue dans l'ensemble du lit fluidisé à de l'ordre de 900° C pendant l'introduction.

Enfin, une fois le lit de chaux vive de granulométrie 100 µm formé, on introduit progressivement le carbonate de calcium, dont la granulométrie est comprise entre 10 à 40 µm, jusqu'à obtenir le bain initial d'oxyde de calcium.

Le carbonate de calcium pulvérulent est ensuite introduit en continu dans le réacteur par la rampe d'alimentation 16, pour former l'oxyde de calcium pur selon l'invention. Le carbonate de calcium pénètre dans le bain initial d'oxyde de calcium pulvérulent en lit fluidisé dont la température est homogène, auquel il se mélange. La fluidisation est effectuée par l'intermédiaire du gaz de fluidisation, par exemple de l'air, injecté par le bas 14 du réacteur. Le débit de fluidisation est contrôlé automatiquement de façon connue en soi.

Le bain est chauffé directement par le système 3 alimenté électriquement de façon à maintenir l'ensemble du bain à une température supérieure ou égale à de l'ordre de 860° C en fonction du débit d'introduction de carbonate de calcium pulvérulent. La dissociation s'opérant, l'oxyde de carbone formé est extrait via le dépresseur/surpresseur 21.

Au fur et à mesure de la dissociation, l'oxyde de calcium se forme à partir du carbonate de calcium et est évacué par déversement.

L'oxyde de carbone et le gaz de fluidisation ayant traversé le bain 2, sont extraits encore légèrement chargés en oxyde de calcium pulvérulent. Les gaz extraits sont donc dépoussiérés en 18 et filtrés en 20 avant de passer par le dépresseur 21.

La capacité d'un réacteur fonctionnant avec le procédé de l'invention, est par exemple avantageusement de l'ordre de 50 à 300 kg/h. Mais des capacités plus importantes peuvent être prévues.

Comme il va de soi, l'invention ne se limite pas aux modes de réalisation plus particulièrement décrits ici. Elle en couvre toutes les variantes et notamment celles où le bain initial d'oxyde de calcium est obtenu à partir de plusieurs charges de granulométrie progressives de carbonate de calcium, comprises entre 400 µm et une valeur inférieure à 50 µm.

## Revendications

1. Procédé de formation d'oxyde de calcium à partir de carbonate de calcium pulvérulent, selon lequel on réalise dans un réacteur (1, 31) un bain initial d'oxyde de calcium pulvérulent en lit fluidisé que l'on chauffe électriquement à une température supérieure à de l'ordre de 900° C, puis on introduit en continu ledit carbonate de calcium pulvérulent dans le bain en maintenant la température du bain toujours supérieure à de l'ordre de 860° C par chauffage électrique, pour dissocier ledit carbonate de calcium en oxyde de calcium et en gaz carbonique.

2. Procédé selon la revendication 1, caractérisé en ce que, pour former le bain initial d'oxyde de calcium pulvérulent, on chauffe à une température supérieure à environ 900° C un premier bain en lit fluidisé constitué par du calcaire de diamètre granulométrique moyen supérieur à de l'ordre de 300 µm, tout en maintenant la température du lit fluidisé au-dessus de 900° C, on introduit progressivement du calcaire de diamètre granulométrique moyen compris entre 150 et 80 µm en ajustant les débits de fluidisation jusqu'à obtenir un bain de chaux vive de même granulométrie, et enfin, on introduit progressivement du carbonate de calcium de diamètre granulométrique moyen inférieur à de l'ordre de 40 µm jusqu'à obtenir ledit bain initial d'oxyde de calcium en lit fluidisé à une température supérieure à de l'ordre de 900° C.

3. Procédé selon l'une quelconque des revendications 1 et 2, caractérisé en ce que le carbonate de calcium utilisé est obtenu par calcination d'une pierre calcaire prélablement concassée, séparation du calcinat et du gaz carbonique de dissociation, hydratation du calcinat pour élimination des impuretés, et recombinaison du calcinat avec le gaz carbonique de dissociation récupéré, pour former le carbonate de calcium pulvérulent sous forme précipitée.

4. Procédé selon l'une quelconque des revendications précédentes, caractérisé en ce qu'on utilise de l'air comme gaz de fluidisation.

5. Procédé selon l'une quelconque des revendications précédentes, caractérisé en ce que l'on chauffe le bain en lit fluidisé par un réseau (3) d'éléments de chauffage électrique à effet joule, répartis et disposés directement au sein du bain (2) de fluidisation.

6. Procédé selon l'une quelconque des revendications 1 à 4, caractérisé en ce que l'on chauffe le bain en lit fluidisé par chauffage externe.

## Claims

1. Process for forming calcium oxide from pulverulent calcium carbonate, according to which an initial bath of pulverulent calcium oxide is produced in a reactor (1, 31) in the form of a fluidized bed which is heated electrically to a temperature higher than of the order of 900°C, and the said pulverulent calcium carbonate is then introduced continuously into the bath while the temperature of the bath is always kept higher than of the order of 860°C by electrical heating, to dissociate the said calcium carbonate into calcium oxide and carbon dioxide.

2. Process according to Claim 1, characterized in that, to form the initial bath of pulverulent calcium oxide, a first bath in the form of a fluidized bed consisting of limestone of average particle diameter greater than of the order of 300 µm is heated to a temperature above approximately 900°C, while the temperature of the fluidized bed is maintained above 900°C, limestone of a mean particle diameter of between 150 and 80 µm is introduced gradually while the fluidization flow rates are adjusted until a bath of quicklime of the same particle size is obtained and, finally, calcium carbonate of mean particle diameter smaller than of the order of 40 µm is introduced gradually until the said initial bath of calcium oxide is obtained in the form of a fluidized bed at a temperature higher than of the order of 900°C.

3. Process according to either of Claims 1 and 2, characterized in that the calcium carbonate employed is obtained by calcining a precrushed limestone rock, separating the calcinate and the carbon dioxide from dissociation, hydrating the calcinate to remove the impurities and recombining the calcinate with recovered carbon dioxide from dissociation to form pulverulent calcium carbonate in precipitated form.

4. Process according to any one of the preceding claims, characterized in that air is employed as fluidizing gas.

5. Process according to any one of the preceding claims, characterized in that the bath in the form of a fluidized bed is heated by a network (3) of electrical Joule effect heating elements which are distributed and arranged directly within the fluidization bath (2).

6. Process according to any one of Claims 1 to 4, characterized in that the bath in the form of a fluidized bed is heated by external heating.

## Patentansprüche

1. Verfahren zum Bilden von Kalziumoxid aus feinpulverisiertem Kalziumkarbonat, gemäß dessen
in einem Reaktor (1, 31) eine Ausgangsschmelze aus feinpulverisiertem Kalziumoxid in einem elektrisch auf eine Temperatur oberhalb von ungefähr 900°C erwärmten Wirbelbett gebildet wird, und
anschließend fortlaufend das feinpulverisierte Kalziumkarbonat in die Schmelze eingeleitet wird, wobei die Schmelztemperatur immer oberhalb von ungefähr 860°C durch elektrisches Heizen gehalten wird, um so das Kalziumkarbonat in Kalziumoxid und Kohlendioxid aufzuspalten.

2. Verfahren nach Anspruch 1, dadurch gekennzeichnet, daß zum Bilden der Ausgangsschmelze aus feinpulverisiertem Kalziumoxid in dem Fließbett eine aus Kalk mit einem mittleren Korndurchmesser oberhalb von ungefähr 300 µm bestehende erste Schmelze auf eine Temperatur von oberhalb ungefähr 900°C erwärmt wird, wobei die Temperatur des Fließbetts oberhalb von 900°C gehalten wird,
dadurch **gekennzeichnet,** daß
nach und nach Kalk mit einem mittleren Korndurchmesser zwischen 150 und 80 µm eingeführt wird, unter Anpassung der Wirbelstromsinter-Ausbringung, bis eine Schmelze aus ungelöschtem Kalk gleicher Granularität erhalten wird, und schließlich
nach und nach Kalziumkarbonat mit einem mittleren Korndurchmesser unterhalb der Größenordnung von 40 µm zugefügt wird, bis die Ausgangsschmelze des Kalziumoxids im Fließbett bei einer Temperatur oberhalb der Größenordnung von 900°C gebildet wird.

3. Verfahren nach einem der Ansprüche 1 und 2, dadurch gekennzeichnet, daß das benützte Kalziumkarbonat dadurch erhalten wird, daß ein Kalkstein vorab (prelablement) grob zerkleinert wird, der gebrannte Kalk und das Kohlendioxid der Dissoziation getrennt werden, der gebrannte Kalk zum Entfernen der Verunreinigungen einer Hydratation unterzogen wird und der gebrannte Kalk mit dem wiedergewonnenen Kohlendioxid der Dissoziation wieder verbunden wird, damit das feinpulverige Kalziumkarbonat in ausgefällter Form gebildet wird.

4. Verfahren nach einem der vorstehenden Ansprüche, dadurch gekennzeichnet, daß Luft als Gas zum Wirbelstromsintern benützt wird.

5. Verfahren nach einem der vorstehenden Ansprüche, dadurch gekennzeichnet, daß die Schmelze im Wirbelstrombett durch ein von elektrischen Heizelementen gebildetes Gitter mit Stromwärme geheizt wird, wobei die Heizelemente unmittelbar innerhalb der Schmelze (2) zum Wirbelstromsintern verteilt und angeordnet sind.

6. Verfahren nach einem der Ansprüche 1 bis 4, dadurch gekennzeichnet, daß die Schmelze in dem Wirbelbett durch eine Außenheizung erwärmt wird.
